# EUROPÄISCHE PATENTSCHRIFT

(11) **EP 3 286 078 B1**
(45) Veröffentlichungstag und Bekanntmachung des Hinweises auf die Patenterteilung: **09.02.2022**
(21) Anmeldenummer: 16720996.4
(22) Anmeldetag: 22.04.2016
(51) Int. Cl.: B64C 9/00, B64C 9/32, B29C 70/44

(54) **STEUERFLÄCHENELEMENT**
CONTROL SURFACE ELEMENT
ÉLÉMENT DE GOUVERNE

(30) Priorität: 24.04.2015 AT 503322015
(43) Veröffentlichungstag der Anmeldung: 28.02.2018
(73) Patentinhaber: FACC AG, 4910 Ried im Innkreis (AT)
(72) Erfinder: FILSEGGER, Hermann, 4910 Ried im Innkreis (AT); STEPHAN, Walter, 4910 Ried im Innkreis (AT)
(74) Vertreter: SONN Patentanwälte OG
(86) Internationale Anmeldenummer: PCT/AT2016/050107
(87) Internationale Veröffentlichungsnummer: WO 2016/168879

(56) Entgegenhaltungen:
- EP-A1- 2 681 037
- DE-A1- 2 109 934
- DE-A1- 2 109 934
- DE-A1-102008 013 759
- DE-A1-102010 027 696
- GB-A- 2 262 315
- US-A- 4 806 077
- US-A1- 2009 072 090
- US-A1- 2010 151 189
- US-B1- 6 187 411

## Beschreibung

Die Erfindung betrifft ein Steuerflächenelement gemäß dem Oberbegriff von Anspruch 1.

Weiters betrifft die Erfindung ein Verfahren gemäß dem Oberbegriff von Anspruch 8.

DE 10 2010 027696 A1 offenbart eine andersartige Beplankungsschale für einen aerodynamischen Körper.

US 2010/151189 A1 bezieht sich auf ein u.a. als Steuerfläche verwendbares Verbundbauteil, das aus zwei außenliegenden Schichten und einem verstärkten Kern besteht. Der Kern weist eine Verstärkungsstruktur aus Gruppen von zusammengesetzten Stiften auf, die durch einen Schaum aus Rohacell in ihrer Position gehalten werden.

In der DE 21 09 934 A1 wird ein Verfahren zur Herstellung eines Schalenbauteils beschrieben, welches beispielsweise bei einem Steuerruder eines Segelflugzeuges zum Einsatz kommen kann. Das Schalenbauteil ist mit einem Tragholm versehen, an welchem als Versteifungsrippen ausgebildete Profilteile angeschlossen sind. Im Bereich des Tragholmes bzw. der Versteifungsrippen ist der gegenüber einer Außenhaut freibleibende Raum mit Hartschaumstoff, welcher auch mit Fasern verstärkt sein kann, ausgefüllt.

US 4 806 077 A bezieht sich auf ein Rotorblatt mit einer in Längsrichtung verlaufenden Zentralrippe, wobei im vorderen und im hinteren Freiraum jeweils ein Füllkern vorgesehen ist.

Im Stand der Technik sind verschiedenste Ausführungen von luftumströmten, aerodynamischen Steuerflächenelementen (englisch als "control surfaces" bezeichnet) vorgeschlagen geworden, mit welchen die Flugsteuerung bewerkstelligt wird. Bei Störklappen wurde üblicherweise eine Wabenkernstruktur vorgesehen, welche aus tragenden Deckhäuten und einem Stützkern in Wabenform (englisch "honeycomb") besteht. Diese Ausführung bringt jedoch verschiedene Nachteile mit sich. Es hat sich gezeigt, dass die bekannten Steuerflächen mit Honeycomb-Struktur einerseits anfällig für Wassereintritt sind. Andererseits konnte ein gleichmäßiger Stoßschutz nicht immer gewährleistet werden. Bei einem Aufprall zwischen den Wänden des Wabenkerns können Beschädigungen auftreten. Darüber hinaus ist die Luftfahrtindustrie ständig danach bestrebt, Gewichtseinsparungen zu erzielen.

In der US 6,234,423 B1 wird ein Höhenruder beschrieben, bei welchem eine obere Außenhaut und eine untere Außenhaut in zwei getrennten Verfahrensschritten gefertigt werden. Jede Außenhaut wird durch mit Kernmaterialien versehene Prepregs (d.h. mit Reaktionsharzen vorimprägnierte Faserhalbzeuge) gebildet, welche in einem Autoklaven unter Druck und Hitze ausgehärtet wird. Anschließend wird die obere Außenhaut mit der unteren Außenhaut verklebt. Bei der Herstellung der Außenhäute werden Versteifungsrippen ausgebildet, welche einen in sich geschlossenen Querschnitt aufweisen, der mit einem Schaumstoffkern ausgefüllt ist. Zwischen den Versteifungsrippen werden jedoch Hohlräume ausgebildet.Das bekannte Verfahren ist nachteiligerweise auf die Herstellung von Höhenrudern beschränkt, wobei der Verfahrensablauf zudem sehr kompliziert ist. Die Fertigung der Außenhäute durch Prepregs in getrennten Verfahrensschritten ist aufwändig und teuer. Darüber hinaus bilden die Klebeverbindungen zwischen der oberen und unteren Außenhaut Schwachstellen, welche anfällig für Schäden, insbesondere durch Stoßbelastungen, sind. Demnach kann keine wirksame Kraftübertragung von der Oberseite zur Unterseite der Steuerfläche gewährleistet werden. Ein weiterer Nachteil besteht darin, dass das bekannte Höhenruder zwischen den Versteifungsrippen Hohlräume vorsieht, welche anfällig für ein Wassereindringen sind. Aufgrund dieser Einschränkungen könnte das bekannte Verfahren den geltenden Zulassungsvoraussetzungen für den Luftverkehr nicht genügen.

Die US 2009/072090 A1 bezieht sich auf ein Steuerflächenelement an einem Flugzeugflügel. In einer Ausführungsform ist eine Verstärkungsstruktur zwischen Außenhautelementen angeordnet. Die Verstärkungsstruktur befindet sich zwischen zwei Honeycomb-Kernen. Überdies wird zwischen zwei Schenkeln der Verstärkungsstruktur ein Freiraum gebildet.

Die US 3,775,238 A zeigt ein Querruder mit Außenhautpaneelen, zwischen denen Verstärkungsrippen angeordnet sind. Die Außenhautpaneele sind als Kompositbauteile mit Schaumstoffkern aufgebaut. Bei diesem Stand der Technik bleiben ebenfalls Freiräume zwischen den Verstärkungsrippen des Querruders.

Die DE 10 2008 013 759 A1 beschreibt die Herstellung eines Faserverbundbauteils in Form einer aerodynamischen Steuerfläche, welche von einer Außenhaut umschlossene Versteifungselemente aufweist. Hierbei werden entfernbare Kerne in einer Kernform eingebracht, um die innere Oberflächengeometrie des Faserverbundbauteils abzubilden. Danach wird ein Faserhalbzeug auf die Kerne aufgelegt. Das Faserverbundbauteil wird schließlich im RTM-Verfahren gefertigt. Danach werden die Kerne entfernt. Demnach werden bei diesem Stand der Technik die Kerne abschließend entfernt. Zu diesem Zweck handelt es sich bei dem Kernmaterial der Kerne um einen schmelzbaren Stoff, dessen Schmelzpunkt oberhalb der Aushärtungstemperatur des Matrix-Materials liegt, bzw. um eine aushärtbare Substanz, die nachträglich durch ein geeignetes Lösungsmittel wieder aufgelöst und aus dem späteren Bauteil heraus gespült werden kann. Zum Entfernen der Kerne dienen nachträglich eingebrachte Bohrungen in der Außenhaut bzw. in Eckbereichen der Querrippen angeordnete Öffnungen, die später als Drainage-Öffnungen für Kondensationswasser dienen.

Die Dokument EP 1 227 035 A2 offenbart einen Spoiler, bei welchem ein Beschlag aus Kunststoffmaterial vorgesehen ist. Der Spoiler weist einen Leichtbaukern in Form eines Wabenkerns auf, der mit einer oberen Deckschicht und einer unteren Deckschicht bedeckt ist. Der Leichtbaukern weist einen Ausschnitt entsprechend dem Beschlag auf.

Demgegenüber besteht die Aufgabe der Erfindung darin, einzelne oder alle Nachteile des Standes der Technik zu beseitigen bzw. zu lindern. Die Erfindung setzt sich daher insbesondere zum Ziel, ein Steuerflächenelement der eingangs angeführten Art zu schaffen, welches mit einem vereinfachten Verfahren, insbesondere mit einem Infusionsverfahren, herstellbar ist und die Ausbildung der zumindest einen Verstärkungsrippe erleichtert.

Gelöst wird diese Aufgabe durch ein Steuerflächenelement nach Anspruch 1 und durch ein Verfahren nach Anspruch 8.

Erfindungsgemäß ist die Verstärkungsrippe zwischen zwei Kernsegmenten des Kernelements angeordnet.

Vorteilhafterweise kann die Verstärkungsrippe (bzw. ein Halbzeug zur Ausbildung der Verstärkungsrippe) durch die Kernsegmente zuverlässig seitlich, d.h. in Längsrichtung des Steuerflächenelements (bzw. in Spannweitenrichtung des Flugzeugs), fixiert werden. Bevorzugt sind mehrere in Längsrichtung des Steuerflächenelements beabstandete Verstärkungs- bzw. Versteifungsrippen vorgesehen. Die erfindungsgemäße Ausführung ermöglicht die Fertigung des Steuerflächenelements in einem Infusionsverfahren, bei welchem ein Kunststoff im flüssigen Zustand durch ein Faserhalbzeug geleitet, insbesondere gesaugt, wird, um die obere Außenhaut, die untere Außenhaut und die Verstärkungsrippe gemeinsam herzustellen. Bei der Fertigung kann die Verstärkungsrippe durch die damit in Kontakt stehenden Kernsegmente präzise positioniert und ausgeformt werden. Darüber hinaus hat die Anordnung des Kernelements den Vorteil, dass das Steuerflächenelement gegen ein Wassereindringen im Betrieb besser geschützt ist. Weiters ist von Vorteil, dass der Stoßschutz verbessert wird. Wenn sich das Kernelement, abgesehen von der zumindest einen Verstärkungsrippe zwischen den Kernsegmenten, über im Wesentlichen die gesamte Länge (bzw. Erstreckung in Längsrichtung des Steuerflächenelements) des Zwischenraums zwischen der oberen und der unteren Außenhaut des Steuerflächenelements erstreckt, kann ein Wassereintritt entlang des Steuerflächenelements zuverlässig verhindert werden. Darüber hinaus ist bevorzugt vorgesehen, dass sich die Kernsegmente des ein- oder mehrteiligen Kernelements im Wesentlichen über die gesamte Breite (d.h. dessen Erstreckung in der Hauptebene des Steuerflächenelements, im Wesentlichen senkrecht zu dessen Längsrichtung) des Zwischenraums zwischen der oberen und unteren Außenhaut erstrecken. Dies hat einerseits den Vorteil, dass die Verstärkungsrippe über deren Länge fixiert vorliegt. Andererseits kann der Schutz gegen Wassereintritt weiter verbessert werden. Für die Zwecke dieser Offenbarung beziehen sich die Richtungsangaben "oben", "unten", "vorne", "hinten" auf den Einbauzustand des Steuerflächenelements anhand der bevorzugten Anwendung bei einer Störklappe. Für andere Arten von Steuerflächenelemente sind die Richtungsangaben sinngemäß zu übertragen.

Um die Verstärkungsrippe (bzw. ein Halbzeug zur Ausbildung der Verstärkungsrippe) bei der Herstellung in Längsrichtung des Steuerflächenelements zu stabilisieren bzw. fixieren, weist die Verstärkungsrippe zumindest einen im Wesentlichen senkrecht zur Längsrichtung des oberen Außenhautelements erstreckten Steg auf, wobei das eine Kernsegment mit der einen Längsseite des Stegs der Verstärkungsrippe und das andere Kernsegment mit der anderen Längsseite des Stegs der Verstärkungsrippe in Kontakt steht. Bevorzugt ist der Steg der Verstärkungsrippe im Wesentlichen senkrecht zum oberen Außenhautelement angeordnet. Auf diese Weise wird die Verstärkungsrippe bei der Herstellung, beispielsweise in einem Infusionsverfahren, zuverlässig zwischen den zwei Kernsegmenten gehalten.

Die Verstärkungsrippe kann unterschiedliche Querschnittsgeometrien aufweisen. Bevorzugt ist jedoch, dass die Verstärkungsrippe einen offenen Querschnitt aufweist. Im Unterschied zu einem geschlossenen Querschnitt bedeutet dies, dass die Verstärkungsrippe keinen allseits geschlossenen Innenraum aufweist. Die Verstärkungsrippe wird daher in Längsrichtung des Steuerflächenelements (d.h. in Spannweitenrichtung des Flugzeugflügels) durch die Kernsegmente gehalten, welche mit der Verstärkungsrippe in Kontakt stehen.

Um eine Kraftübertragung zwischen der Oberseite des Steuerflächenelements und der Unterseite des Steuerflächenelements zu bewirken, erstreckt sich der Steg der Verstärkungsrippe von der Innenseite des oberen Außenhautelements zur Innenseite des unteren Außenhautelements.

Vorzugsweise füllt das Kernelement zwischen dem oberen Außenhautelement, dem unteren Außenhautelement und der zumindest einen Verstärkungsrippe gebildete Zwischenräume im Wesentlichen vollständig aus. Bei dieser Ausführung ist das Steuerflächenelement im Wesentlichen frei von inneren Hohlräumen, wodurch ein Wassereindringen zuverlässig verhindert werden kann. Nebenbei wird auch der Schutz gegenüber Stoßbelastungen im Einbauzustand wesentlich verbessert. Demgegenüber hatten Steuerflächenelemente in Form von Störklappen mit Honeycomb-Kern einerseits den Nachteil, dass Wasser in die leeren Zwischenräume eindringen kann. Andererseits konnten Stoßbelastungen zwischen den Wänden der Wabenstruktur Beschädigungen hervorrufen. Darüber hinaus hat die vorliegende Ausführung den Vorteil, dass die Verstärkungsrippe (bzw. das dafür vorgesehene Halbzeug) während des Herstellungsvorgangs allseitig fixiert vorliegt.

Gemäß einer besonders bevorzugten Ausführungsvariante ist als Verstärkungsrippe ein Faserverbundelement, insbesondere aus kohlenstofffaserverstärktem Kunststoff, vorgesehen, welches zwischen zwei voneinander getrennten Kernsegmenten des Kernelements angeordnet ist. Das Faserverbundelement wird durch ein Faserhalbzeug, insbesondere ein Fasergelege, ein Fasergewebe, ein Fasergeflecht, ein Fasergestick, eine Fasermatte, gebildet, welches mit einem ausgehärteten Kunststoff, beispielsweise Epoxidharz, getränkt bzw. infiltriert ist.

Die Verstärkungsrippe weist zumindest einen im Wesentlichen parallel zur Hauptebene des oberen Außenhautelements erstreckten, an der Innenseite des oberen Außenhautelements angeordneten oberen Flansch und/oder einen im Wesentlichen parallel zur Hauptebene des unteren Außenhautelements erstreckten, an der Innenseite des unteren Außenhautelements angeordneten unteren Flansch auf, wobei der obere und/oder untere Flansch in einem Winkel, vorzugsweise im Wesentlichen im rechten Winkel, zum Steg der Verstärkungsrippe angeordnet ist. Bevorzugt weist die Verstärkungsrippe ein C-Profil auf, welches durch den Steg mit den davon abgewinkelten Flanschen gebildet ist. Diese Ausführung ermöglicht eine günstige Lastableitung aus dem oberen Außenhautelement mit der oberseitigen Außenfläche und aus dem unteren Außenhautelement mit der unterseitigen Außenfläche in die Verstärkungsrippe des Steuerflächenelements.

Um den oberen bzw. unteren Flansch der Verstärkungsrippe im Wesentlichen bündig mit angrenzenden Abschnitten der Ober- bzw. Unterseite des Kernelements anzuordnen, ist bevorzugt vorgesehen, dass zumindest eines der Kernsegmente an einer der Innenseite des unteren Außenhautelements zugewandten Unterseite eine untere Vertiefung für den unteren Flansch der Verstärkungsrippe und/oder an einer der Innenseite des oberen Außenhautelements zugewandten Oberseite eine obere Vertiefung für den oberen Flansch der Verstärkungsrippe aufweist. Auf diese Weise kann das Kernelement den Zwischenraum zwischen dem oberen und unteren Außenhautelement im Wesentlichen vollständig ausfüllen.

Gemäß einer nicht Teil der Erfindung bildenden Ausführungsvariante ist das Kernelement zur Ausbildung der zumindest einen Verstärkungsrippe mit Nähten aus Faserverbundwerkstoff versehen. Demnach ist die Verstärkungsrippe bei dieser Ausführung durch eine Ersatzstruktur aus Verstärkungsnähten gebildet. Die Verstärkungsrippe ist auch bei dieser Ausführung zwischen zwei Kernsegmenten angeordnet, welche beidseits der Naht aus Faserverbundwerkstoff ausgebildet sind. Durch die passgenaue Anordnung der Nähte aus Faserverbundwerkstoff in Durchgangslöchern des Kernelements wird das Faserhalbzeug für die Ausbildung der Verstärkungsrippe bei der Fertigung fixiert. Die Verstärkung von Schaumstoff mit Nähten aus Faserverbundwerkstoff ist im Stand der Technik an sich bekannt. Beispielsweise wird in der EP 1 993 526 B1 ein Verfahren beschrieben, mit welchem verstärkte Schaumwerkstoffe für die Flugzeugindustrie hergestellt werden können. Wie bei diesem Stand der Technik kann bei der Herstellung des vorliegenden Steuerflächenelements zunächst ein Durchgangsloch in dem Schaumstoffmaterial des Kernelements geschaffen werden. Daraufhin wird ein Faserbündel auf der einen Seite des Kernelements angeordnet, danach eine hakenförmige Nadel von der anderen Seite des Kernelements her durch das Durchgangsloch geführt und schließlich das Faserbündel durch das Durchgangsloch in dem Schaumstoffmaterial gezogen. Das Faserbündel wird bei der Herstellung mit Kunststoff im flüssigen Zustand getränkt, um die Nähte aus Faserverbundwerkstoff zu erhalten. Bei dieser Ausführungsvariante ist daher die Verstärkungsrippe in das Kernelement integriert, welches bevorzugt einteilig ausgebildet ist. Das Faserbündel besteht bevorzugt aus einer Vielzahl von Einzelfasern bzw. Monofilamenten.

Zur Ausbildung der Verstärkungsrippe in dem Kernelement ist es günstig, wenn sich die Nähte aus Faserverbundwerkstoff jeweils von der dem oberen Außenhautelement zugewandten Oberseite des Kernelements zu der dem unteren Außenhautelement zugewandten Unterseite des Kernelements erstrecken. Diese Ausführung ermöglicht zudem die Anordnung der Nähte in Durchgangslöchern des Kernelements, welche sich von dessen Oberseite zur Unterseite erstrecken.

Um die Verstärkungsrippe in Querrichtung des Steuerflächenelements auszubilden, ist es günstig, wenn mehrere Nähte aus Faserverbundwerkstoff an einer im Wesentlichen senkrecht zur Ober- bzw. Unterseite verlaufenden Ebene des Kernelements angeordnet sind. Bei dieser Ausführung wird die Verstärkungsrippe dadurch erhalten, dass das Kernelement entlang einer Vertikalebene mit mehreren einzelnen Nähten versehen ist, welche in der Gesamtheit die Verstärkungsrippe in Querrichtung des Steuerflächenelements bilden. Vorzugsweise sind einzelne Nähte im Wesentlichen über die gesamte Breite des Kernelements, d.h. über dessen gesamte Erstreckung senkrecht zur Längsrichtung des Steuerflächenelements, vorgesehen. Zur Ausbildung einer Verstärkungsrippe mit einer bestimmten Breite (bzw. Erstreckung in Längsrichtung des Steuerflächenelements) ist es günstig, wenn mehrere im Wesentlichen senkrecht zur Ober- bzw. Unterseite erstreckte, in einem Abstand zueinander angeordnete Ebenen des Kernelements mit Nähten aus Faserverbundwerkstoff durchsetzt sind. Die Breite der Verstärkungsrippe ist durch den Abstand zwischen den in Längsrichtung des Steuerflächenelements gesehen äußeren Vertikalebenen mit den Nähten festgelegt. Die Länge der Verstärkungsrippe entspricht vorzugsweise im Wesentlichen der Breite des Kernelements, welche bei einer Störklappe die Erstreckung in Tiefen- bzw. Flugrichtung ist.

Bei dieser Ausführung ist es darüber hinaus günstig, wenn zwischen der Oberseite des Kernelements und der Innenseite des oberen Außenhautelements, im Bereich der die Verstärkungsrippe bildenden Nähte aus Faserverbundwerkstoff ein flächiges Faserverbundelement angeordnet ist, welches vorzugsweise im Wesentlichen senkrecht zu der Verstärkungsrippe angeordnet ist. Entsprechend kann zwischen der Unterseite des Kernelements und der Innenseite des unteren Außenhautelements, im Bereich der die Verstärkungsrippe bildenden Nähte aus Faserverbundwerkstoff ein weiteres flächiges Faserverbundelement angeordnet sein, welches vorzugsweise ebenfalls im Wesentlichen senkrecht zu der Verstärkungsrippe angeordnet ist. Die flächigen Faserverbundelemente können mit dem Kernelement vernäht sein. Bei dieser Ausführung kann eine im Querschnitt I-förmige oder C-förmige Verstärkungsstruktur geschaffen werden, wobei die Verstärkungsrippe den Steg, das flächige Faserverbundelement den oberen Flansch und das weitere Faserverbundelement einen unteren Flansch der C- oder I-förmigen Verstärkungsstruktur bildet.

Aus Stabilitätsgründen ist es günstig, wenn die Nähte aus Faserverbundwerkstoff in einem von 90° abweichenden Winkel von vorzugsweise zwischen 30 und 60 °, insbesondere von im Wesentlichen 45°, zur Ober- bzw. Unterseite des Kernelements angeordnet sind.

Bei bekannten Steuerflächenelementen, insbesondere Störklappen, wurde an der in Flugrichtung gesehen hinteren Kante (im Flugzeugbau auch als "trailing edge" bezeichnet) vielfach eine Verstärkungs- bzw. Endleiste aus Faserverbundwerkstoff angeordnet. Bei der zuvor beschriebenen Ausführungsform kann das Kernelement anstelle der Verstärkungsleiste an einer Hinterkante mit einer im Wesentlichen in Längsrichtung des oberen Außenhautelements verlaufenden Verstärkungsstruktur versehen sein, welche durch weitere Nähte aus Faserverbundwerkstoff gebildet ist. Bei dieser Ausführung wird das Kernelement im Bereich der Hinterkante bzw. "trailing edge" von Nähten durchsetzt, welche zusammen die Verstärkungsstruktur in Längsrichtung (d.h. bei einer Störklappe in Spannweitenrichtung) des Steuerflächenelements bilden. Bevorzugt erstreckt sich die Verstärkungsstruktur im Wesentlichen über die gesamte Länge des Kernelements, d.h. im Wesentlichen über dessen gesamte Erstreckung in Längsrichtung des Steuerflächenelements. Die weiteren Nähte für die Verstärkungsstruktur an der Hinterkante des Kernelements können wie die Nähte für die Verstärkungsrippe ausgebildet sein, so dass auf die vorstehenden Ausführungen verwiesen werden kann. Darüber hinaus können hier auch Nähte im Winkel von im Wesentlichen 90° zur Ober- bzw. Unterseite des Kernelements vorgesehen sein.

Gemäß einer nicht Teil der Erfindung bildenden Ausführungsvariante ist zur Ausbildung der Verstärkungsrippe ein vom Kernelement gesondertes Schaumstoffelement vorgesehen, welches mit Nähten aus Faserverbundwerkstoff versehen ist. Bei dieser Ausführung ist bevorzugt ein Schaumstoffelement höherer Dichte bzw. Festigkeit zwischen zwei Kernsegmenten des Kernelements mit im Vergleich dazu geringerer Dichte bzw. Festigkeit angeordnet. Um die Verstärkungsrippe zu erhalten, durchsetzen Nähte aus Faserverbundwerkstoff entsprechende Durchgangslöcher des Schaumstoffelements.

Die zuvor beschriebene Ausführung hat insbesondere den Vorteil, dass das Schaumstoffelement der Verstärkungsrippe aus einem vom Schaumstoffmaterial des Kernelements verschiedenen Schaumstoff oder aus demselben Schaumstoffmaterial, mit einer im Vergleich dazu höheren Dichte bestehen kann. Vorteilhafterweise kann der Schaumstoff des Schaumstoffelements auf diese Weise hinsichtlich der Einbringung der Nähte aus Faserverbundwerkstoff bzw. der geringeren Harzannahme optimiert werden. Demgegenüber kann das Schaumstoffmaterial des Kernelements an dessen Einsatzzweck angepasst werden. Zur Erzielung eines integralen Steuerflächenelements ist es günstig, dass das obere Außenhautelement, das untere Außenhautelement und die zumindest eine Verstärkungsrippe aus Faserverbundwerkstoff, insbesondere kohlenstofffaserverstärktem Kunststoff, bestehen, wobei das obere Außenhautelement, die zumindest eine Verstärkungsrippe und das untere Außenhautelement über den Kunststoff des Faserverbundwerkstoffs miteinander verbunden sind. Vorteilhafterweise wird eine integrale Verbindung zwischen dem oberen Außenhautelement, dem unteren Außenhautelement und der dazwischen angeordneten Verstärkungsrippe geschaffen, welche im Wesentlichen ausschließlich durch den Kunststoff des Faserverbundwerkstoffs gebildet ist. Dies bedeutet, dass der Kunststoff im flüssigen Zustand ein Faserhalbzeug durchtränkt, mit welchem das obere bzw. untere Außenhautelement und die Verstärkungsrippe ausgebildet wird. Aufgrund der Durchtränkung des Faserhalbzeugs mit dem Kunststoff im flüssigen Zustand wird die stoffschlüssige Verbindung zwischen dem oberen bzw. unteren Außenhautelement und der zumindest einen Verstärkungsrippe erzielt. Diese Ausführung bewirkt eine wesentliche Vereinfachung gegenüber dem Stand der Technik, bei welchem das obere und das untere Außenhautelement samt Verstärkungsrippen getrennt voneinander hergestellt und anschließend miteinander verklebt (oder verbolzt bzw. vernietet) werden. Vorteilhafterweise kann bei der vorliegenden Ausführung auf eine solche Klebe- Bolzen- oder Nietverbindung zwischen dem oberen und dem unteren Außenhautelement und der Verstärkungsrippe verzichtet werden, wodurch eine strukturelle Schwachstelle des Steuerflächenelements ausgeschaltet wird. Weiters können die beim Stand der Technik eventuell vorhandenen Bohrlöcher beseitigt werden, welche potentielle Lecks für einen Flüssigkeitseintritt darstellen. Darüber hinaus kann der Verfahrensablauf wesentlich einfacher und rascher gestaltet werden.

Um das Gewicht des Steuerflächenelements möglichst gering zu halten, aber ausreichende Stabilität für die Verstärkungsrippe zu gewährleisten, ist es von Vorteil, wenn das Schaumstoffmaterial des Kernelements aus Polymethacrylimid gebildet ist. Ein solcher Schaumstoff wird beispielsweise unter dem Handelsnamen "Rohacell" vertrieben. Dieser Schaumstoff weist ein Gewicht von 31 Kilogramm pro Kubikmeteter auf. Für das Kernelement können jedoch auch andere Hartschaumstoffe verwendet werden, die beispielsweise aus Polyvinylchlorid oder Polyurethan bestehen.

Bei dem erfindungsgemäßen Verfahren wird die Verstärkungsrippe zwischen zwei Kernsegmenten des Kernelements positioniert bzw. ausgebildet. Dieses Verfahren bringt die zuvor für das Steuerflächenelement geschilderten Vorteile mit sich, auf welche somit verwiesen werden kann. Wesentlich für die Erfindung ist, dass die Verstärkungsrippe während des Herstellungsverfahrens zwischen den Kernsegmenten des Kernelements seitlich fixiert wird, wodurch die exakte Positionierung und Ausformung der Verstärkungsrippe gewährleistet wird.

Zur Herstellung des Steuerflächenelements wird erfindungsgemäß ein Faserhalbzeug zur Ausbildung des oberen Außenhautelementes, des unteren Außenhautelementes und der zumindest einen Verstärkungsrippe im trockenen Zustand an dem Kernelement angeordnet und danach mit einem Kunststoff im flüssigen Zustand durchtränkt. Bei dieser Ausführung werden daher das obere Außenhautelement, das untere Außenhautelement und die zumindest eine Verstärkungsrippe in demselben Verfahrensschritt ("in one shot") hergestellt. Dies bedeutet, dass das obere und untere Außenhautelement samt der Verstärkungsrippe im nicht ausgehärteten Zustand des Kunststoffs miteinander verbunden werden. Daher ist es nicht erforderlich, das obere Außenhautelement und das untere Außenhautelement, wie vielfach im Stand der Technik üblich, in gesonderten Verfahrensschritten durch Aushärten von Prepregs in einem Autoklaven herzustellen und danach im ausgehärteten Zustand miteinander zu verkleben, zu verbolzen oder zu vernieten. Die Verwendung eines Autoklaven ist bei der vorliegenden Ausführung nicht erforderlich. Die Aushärtung des durchtränkten Faserhalbzeugs kann in einem Ofen unter Temperaturzufuhr bzw. im Vakuum stattfinden.

Um das obere Außenhautelement, das untere Außenhautelement und die zumindest eine Verstärkungsrippe in einem Verfahrensschritt auszubilden, ist es vorteilhaft, wenn das Faserhalbzeug mittels einer Folie in einem Infusionsraum angeordnet wird, der mit zumindest einer Zuleitung für den Kunststoff im flüssigen Zustand und mit zumindest einer Vakuumleitung verbunden wird, wobei durch Anlegen eines Unterdrucks an der Vakuumleitung der Kunststoff im flüssigen Zustand angesaugt wird, wobei das Faserhalbzeug zur Ausbildung des oberen Außenhautelementes, des unteren Außenhautelementes und der zumindest einen Verstärkungsrippe durchtränkt wird. Bevorzugt wird das Steuerflächenelement daher in einem Infusionsverfahren hergestellt, wobei das Kernelement dafür sorgt, dass das Faserhalbzeug für die zumindest eine Verstärkungsrippe in der gewünschten Position gehalten wird, wenn der Kunststoff im flüssigen Zustand durch das Faserhalbzeug geleitet wird. Solche Infusionsverfahren sind im Stand der Technik an sich bekannt.

Bevorzugt wird ein als MARI ("Membrane Assisted Resin Infusion") bekanntes Verfahren herangezogen, welches in dem Europäischen Patent EP 2 681 037 beschrieben wird. Bei Anwendung dieses Verfahrens wird das Faserhalbzeug auf einer Tragform angeordnet, wobei mit einer luftdichten Folie ein zur Tragform abgedichteter Infusionsraum gebildet wird. Der Infusionsraum wird einerseits mit zumindest einer Zuleitung für den Kunststoff im flüssigen Zustand und andererseits mit zumindest einer Vakuumleitung verbunden. An der Vakuumleitung wird ein Unterdruck angelegt, um das Faserhalbzeug mit dem Kunststoff zu durchtränken. Die Vakuumleitung weist ein im trockenen Zustand luftdurchlässiges und harzundurchlässiges Membranfilter auf, welches bei einer Durchtränkung mit Harz in einen im Wesentlichen luftdichten Zustand übergeht. Nach vollständiger Durchtränkung des Faserhalbzeugs gelangt der Kunststoff in die Vakuumleitung, welche das Membranfilter aufweist. Bei vollständiger Benetzung mit Harz schließt das Membranfilter, wodurch die Luftabsaugung unterbrochen wird. Bei einer bevorzugten Ausführung des Membranfilters, welche aus der Sportbekleidung bekannt ist, ist eine dünne Silikon-Haut vorgesehen, welche im Herstellungsprozess derart überdehnt wird, dass feine Poren erzeugt werden, die für Luft durchlässig, jedoch für eine Flüssigkeit, im vorliegenden Fall Harz, undurchlässig sind. Im Kontakt mit Harz werden die Poren allmählich verschlossen, so dass die Membran in den luftdichten Zustand übergeht. Die Silikon-Haut kann mit einer Tragschicht in Form eines Gewebes verbunden sein.

Darüber hinaus ist es auch denkbar, das Steuerflächenelement unter Anwendung des in der EP 1 181 149 B1 beschriebenen Injektionsverfahrens herzustellen.

Die Erfindung wird nachstehend anhand von bevorzugten Ausführungsbeispielen, auf die sie jedoch nicht beschränkt sein soll, weiter erläutert. In der Zeichnung zeigt:
Fig. 1. eine auseinandergezogene Ansicht eines erfindungsgemäßen Steuerflächenelements mit einem oberen und einem unteren Außenhautelement, wobei mehrere, in der gezeigten Ausführung acht, Verstärkungsrippen zwischen Kernsegmenten eines Hartschaumstoff-Kernelements angeordnet sind;
Fig. 2 eine Ansicht eines weiteren erfindungsgemäßen Steuerflächenelements mit Blick auf dessen Unterseite, wobei das untere Außenhautelement weggelassen ist;
Fig. 3 eine Ansicht eines nicht Teil der Erfindung bildenden Steuerflächenelements mit Blick auf dessen Unterseite, wobei das untere Außenhautelement wiederum weggelassen ist;
Fig. 4 eine Draufsicht auf das Kernelement für das Steuerflächenelement gemäß Fig. 3;
Fig. 5 eine Ansicht des in Fig. 4 mit einem Kreis eingezeichneten Details A;
Fig. 6 einen Schnitt entlang der Linie VI-VI in Fig. 5;
Fig. 7 schematisch die Fertigung des Kernelementes gemäß Fig. 4 bis 6;
Fig. 8 einen Ausschnitt eines Kernelements für nicht Teil der Erfindung bildenden Steuerflächenelement, wobei zur Ausbildung einer Verstärkungsrippe ein eigenes Schaumstoffelement mit Nähten aus Faserverbundwerkstoff zwischen zwei Kernsegmenten angeordnet ist;
Fig. 9 einen Schnitt entlang der Linie IX-IX in Fig. 12 zur Veranschaulichung des Infusionsverfahrens zur Herstellung des Steuerflächenelements gemäß Fig. 1;
Fig. 10 eine Ansicht des in Fig. 9 mit einem Kreis eingezeichneten Details B;
Fig. 11 eine Ansicht des in Fig. 9 mit einem Kreis eingezeichneten Details C;
Fig. 12 schematisch eine Vorrichtung zur Herstellung des Steuerflächenelements gemäß Fig. 1;
Fig. 13 schematisch eine Draufsicht auf die Vorrichtung gemäß Fig. 12; und
Fig. 14 schematisch die Herstellung einer C-förmigen Verstärkungsrippe für das Steuerflächenelement gemäß Fig. 1.

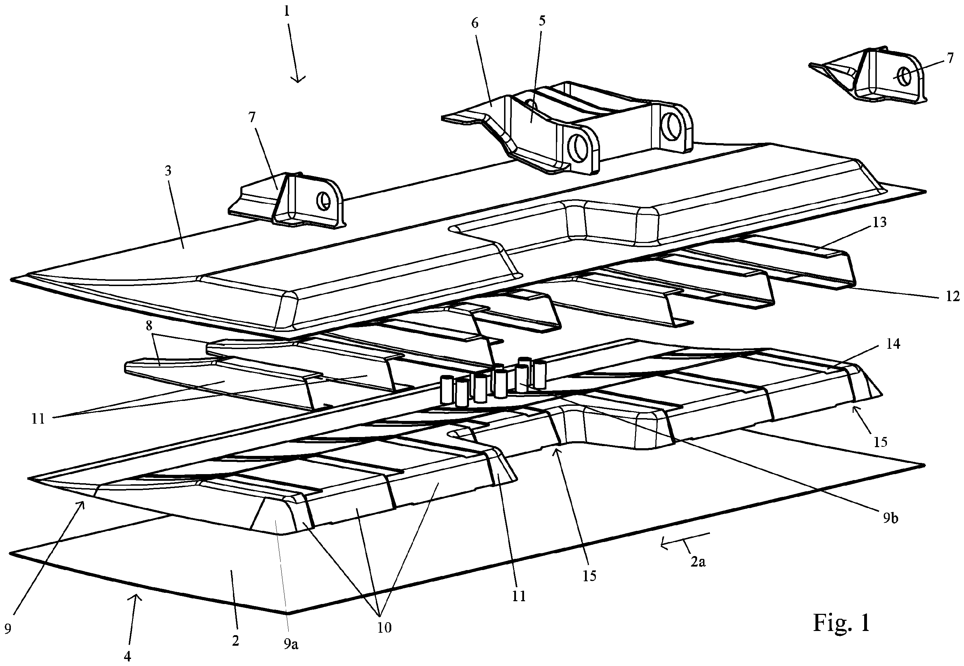

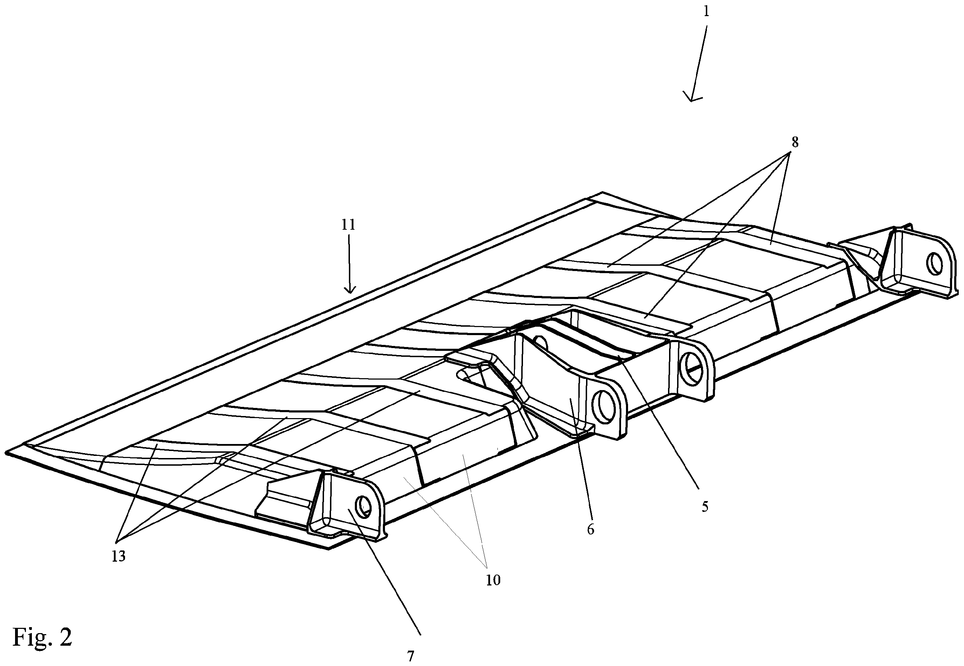

Die Fig. 1, 2 zeigen ein Steuerflächenelement 1 für ein (nicht dargestelltes) Flugzeug. In der gezeigten Ausführung ist das Steuerflächenelement 1 als Störklappe bzw. Spoiler für ein Flugzeug ausgebildet. Entsprechende Ausführungen können jedoch auch bei anderen luftumströmten Steuerflächen von Flugzeugen, insbesondere bei Rudern und (Lande-)klappen, vorgesehen sein. Das Steuerflächenelement 1 weist ein (bezogen auf den Einbauzustand in einem Flugzeugflügel) oberes Schalen- bzw. Außenhautelement 2 und ein unteres Schalen- bzw. Außenhautelement 3 auf. Das obere Außenhautelement 2 weist an der Oberseite eine aerodynamische, im Wesentlichen ebene luftumströmte Außenfläche 4 auf. Das untere Außenhautelement 3 ist im inaktiven Zustand der Störklappe im Inneren des Flugzeugflügels angeordnet. Das Steuerflächenelement 1 weist eine Lagereinrichtung 5 zur gelenkigen Lagerung des Faserverbundelements 3 an einem Strukturbauteil, nämlich an einem Flugzeugflügelkasten, auf. Die Lagereinrichtung 5 weist ein in der gezeigten Ausführung mittig an einer (in Flugrichtung gesehen) vorderen Längskante des Steuerflächenelements 1 vorgesehenes Lagerelement 6 auf, mit welchem eine verschwenkbare Lagerung des Steuerflächenelements 1 an dem Flugzeugflügel erzielbar ist. Das Lagerelement 6 kann auch außermittig angeordnet sein. Die Begriffe "vorne", "hinten", "oben", "unten" beziehen sich für die Zwecke dieser Offenbarung auf den bestimmungsgemäßen Einbauzustand des Steuerflächenelements 1. Das Steuerflächenelement 1 ist in Draufsicht im Wesentlichen rechteckig, so dass eine Längserstreckung (bei der Störklappe in Spannweitenrichtung) und eine Quererstreckung (bei der Störklappe im Wesentlichen senkrecht zur Spannweitenrichtung) ausgebildet ist. Die Lagereinrichtung 5 weist seitlich an der Vorderkante weitere Lagerelemente 7 auf. Da die Ausgestaltung der Lagereinrichtung 5 im Stand der Technik hinlänglich bekannt ist, kann auf nähere Ausführungen dazu verzichtet werden (vgl. dazu beispielsweise auch die AT 409 482 B) .

Wie aus Fig. 1, 2 weiters ersichtlich, sind zwischen dem oberen Außenhautelement 2 und dem unteren Außenhautelement 3 mehrere längliche Verstärkungsrippen 8 angeordnet, welche in Querrichtung des Steuerflächenelements 1 in einem Abstand zueinander erstreckt sind. Die Verstärkungsrippen 8 bewirken eine Verstärkung bzw. Aussteifung des Steuerflächenelements 1. Als Verstärkungsrippen 8 sind in der Ausführung der Fig. 1 einzelne Faserverbundelemente, insbesondere aus kohlenstofffaserverstärktem Kunststoff, vorgesehen.

Darüber hinaus ist in Fig. 1, 2 ein Kernelement 9 ersichtlich, welches aus einzelnen Kernsegmenten 10 besteht. Das Kernelement 9 besteht aus einem Schaumstoffmaterial, vorzugsweise aus Polymethacrylimid. In der gezeigten Ausführung ist jede Verstärkungsrippe 8 im Wesentlichen passgenau zwischen zwei Kernsegmenten 10 des Kernelements 9 angeordnet. Die einzelnen Kernsegmente 10 des Kernelements 9 füllen die Zwischenräume zwischen dem oberen Außenhautelement 2, dem unteren Außenhautelement 3 und den einzelnen Verstärkungsrippen 9 (bzw. einer Verstärkungs- bzw. Endleiste an der Hinterkante) im Wesentlichen vollständig aus. Weiters sind in Fig. 1, 2 ein Keilelement 9a, insbesondere aus glasfaserverstärktem Kunststoff, an einem Eckbereich des Kernelements 9 und senkrecht auf das Kernelement 9 stehende Rohrelemente 9b, insbesondere aus kohlenstofffaserverstärktem Kunststoff, im Bereich der Lagereinrichtung 5 ersichtlich. Je nach Ausführung können die Rohrelement 9b auch entfallen.

Gemäß Fig. 1 weist jede Verstärkungsrippe 8 genau einen im Wesentlichen senkrecht zur Längsrichtung 2a des oberen Außenhautelements 2 erstreckten Steg 11 auf, welcher im Wesentlichen senkrecht zur Hauptebene des oberen 2 und/oder unteren Außenhautelements 3 angeordnet ist. Im Einbauzustand stehen die Stege 11 der Verstärkungsrippen 8 an beiden Längsseiten in Kontakt mit je einem Kernsegment 10, wodurch die Verstärkungsrippen 8 in ihrer Position fixiert sind. Der Steg 11 der Verstärkungsrippe 8 verläuft von der Innenseite des oberen Außenhautelements 2 zur Innenseite des unteren Außenhautelements 3. Demnach entspricht die Höhe des Steges 11 (d.h. dessen Erstreckung senkrecht zur Hauptebene des oberen Außenhautelements 2) im Wesentlichen dem Abstand zwischen der Innenseite des oberen Außenhautelements 2 und der Innenseite des unteren Außenhautelements 3. Darüber hinaus weist die in Fig. 1 gezeigte Verstärkungsrippe 8 einen im Wesentlichen parallel zur Hauptebene des oberen Außenhautelements erstreckten, an der Innenseite des oberen Außenhautelements 2 angeordneten oberen Flansch 12 und einen im Wesentlichen parallel zur Hauptebene des unteren Außenhautelements 3 erstreckten, an der Innenseite des unteren Außenhautelements 3 angeordneten unteren Flansch 13 auf. Der obere Flansch 12 und der untere Flansch 13 sind in der gezeigten Ausführung jeweils im rechten Winkel zum Steg 11 der Verstärkungsrippe 8 angeordnet. Je nach Ausführung können jedoch auch davon abweichende Winkelstellungen des oberen 12 bzw. unteren Flansches 13 vorgesehen sein.

Wie aus Fig. 1 weiters ersichtlich, weisen die Kernsegmente 10 an einer der Innenseite des unteren Außenhautelements 3 zugewandten Unterseite untere Vertiefungen 14 für die unteren Flansche 13 der Verstärkungsrippen 8 und an einer der Innenseite des oberen Außenhautelements 2 zugewandten Oberseite obere Vertiefungen 15 für die oberen Flansche 12 der Verstärkungsrippen 8 auf. Darüber hinaus können die Verstärkungsrippen 8 im Wesentlichen senkrecht zur Hauptebene des oberen Außenhautelements 2 angeordnete, in Längsrichtung 2a erstreckte Flügelelemente aufweisen, welche an entsprechenden stirnseitigen Vertiefungen des Kernelements angeordnet sind (nicht gezeigt).

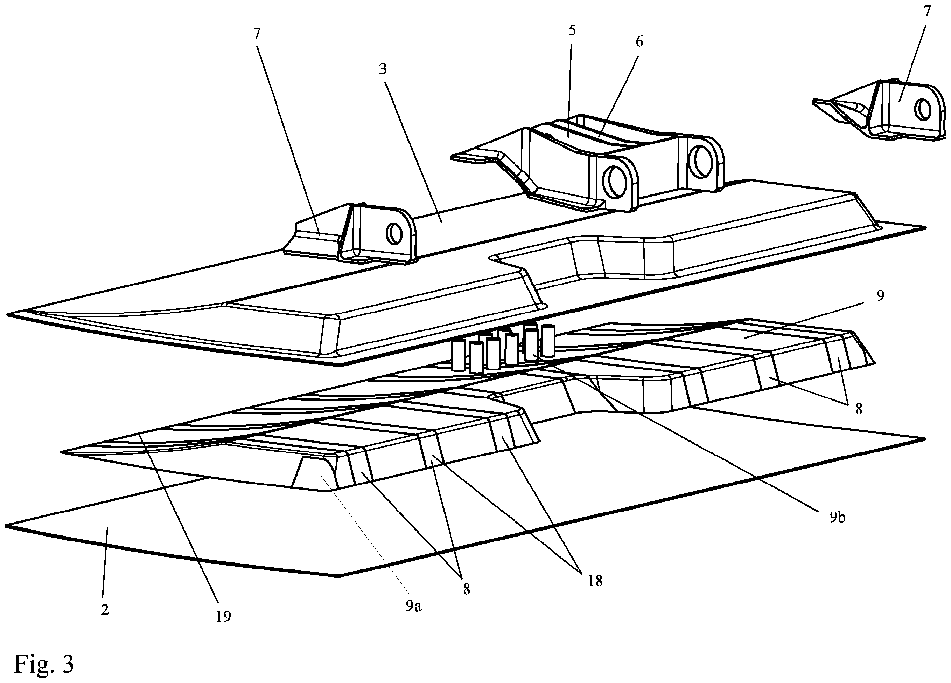

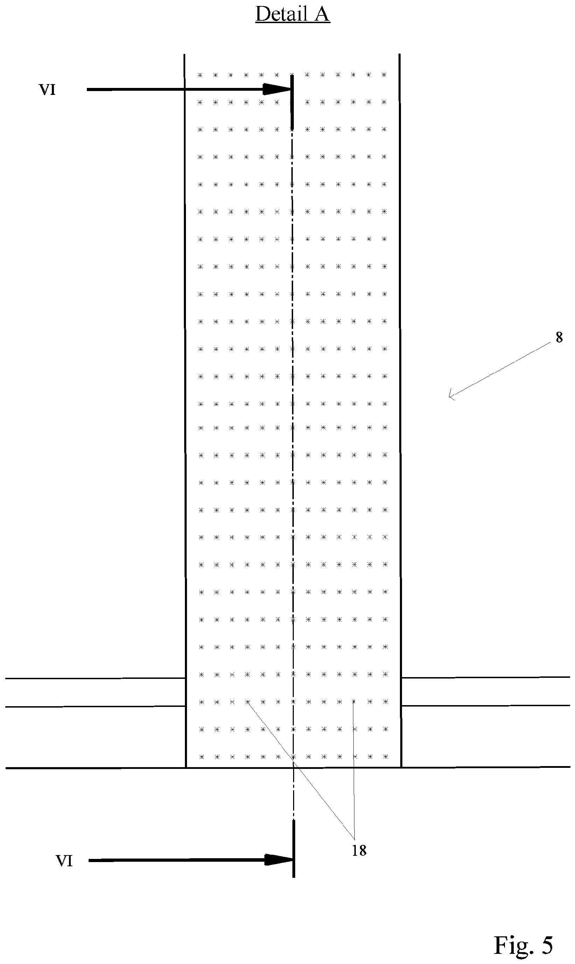

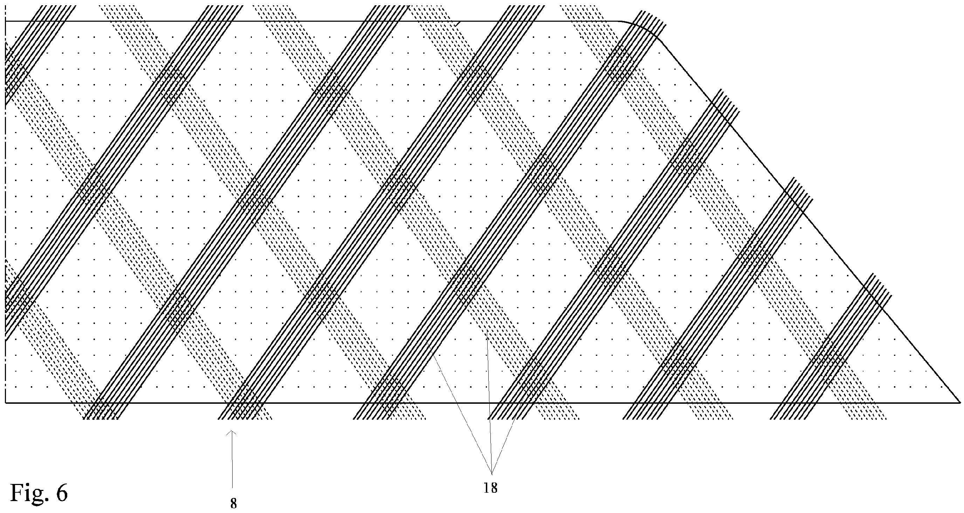

Fig. 3 bis 6 zeigen eine alternative Ausführung des Steuerflächenelements 1, bei welcher das Kernelement 9 zur Ausbildung der Verstärkungsrippen 8 mit Nähten 18 aus Faserverbundwerkstoff durchsetzt wird. Die Nähte 18 aus Faserverbundwerkstoff erstrecken sich jeweils von der dem oberen Außenhautelement 2 zugewandten Oberseite des Kernelements 9 zu der dem unteren Außenhautelement 3 zugewandten Unterseite des Kernelements 9. Zur Ausbildung der Verstärkungsrippe 8 in Querrichtung des Steuerflächenelement 1 sind mehrere Nähte 18 aus Faserverbundwerkstoff an einer im Wesentlichen senkrecht zur Ober- bzw. Unterseite verlaufenden Ebene des Kernelements angeordnet sind. In der gezeigten Ausführung sind mehrere im Wesentlichen senkrecht zur Ober- bzw. Unterseite erstreckte, in einem Abstand zueinander angeordnete Ebenen des Kernelements 9 mit Nähten 18 aus Faserverbundwerkstoff durchsetzt. Die Nähte 18 aus Faserverbundwerkstoff sind in der gezeigten Ausführung in einem Winkel von im Wesentlichen 45°, zur Ober- bzw. Unterseite des Kernelements angeordnet. Darüber hinaus können an der Ober- bzw. Unterseite des Kernelements flächige bzw. plane Faserverbundelemente vorgesehen sein, welche unmittelbar an die Verstärkungsrippe 8 aus den Nähten 18 angeschlossen sind. Damit wird eine obere bzw. untere Flanschverstärkung an der Innenseite des oberen Außenhautelements 2 bzw. an der Innenseite des unteren Außenhautelements 3 ausgebildet. Zur Ausbildung der flächigen Faserverbundelemente kann in der Herstellung ein Faserhalbzeug, beispielsweise ein Fasergewebe, an der Oberseite bzw. Unterseite des Kernelements, ober- bzw. unterhalb des Faserhalbzeug für die Verstärkungsrippe 8, angeordnet werden, wobei das Faserhalbzeug in dem Infusionsverfahren mit Kunststoff getränkt wird. Je nach Ausführung wird auf diese Weise eine im Querschnitt C- oder I-förmige Verstärkungsstruktur geschaffen.

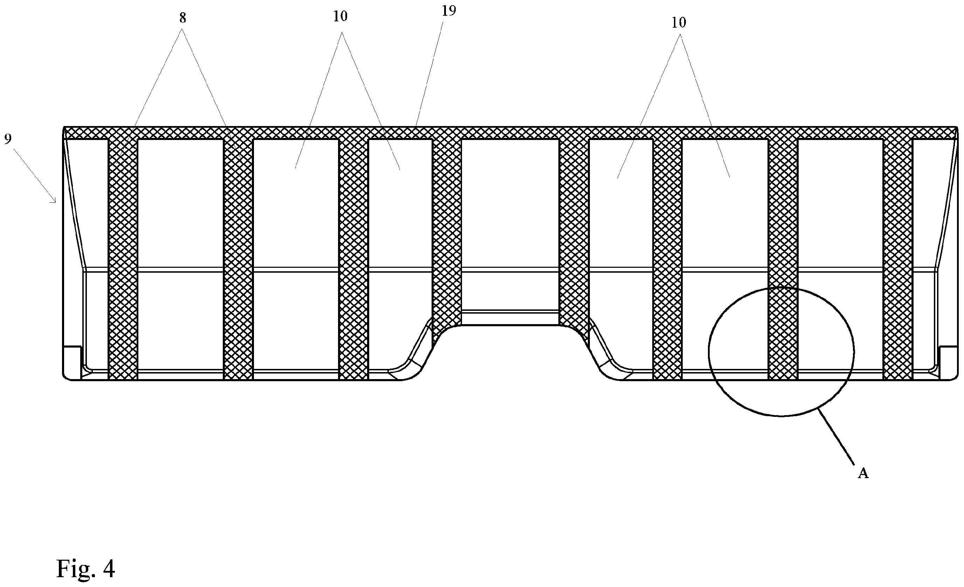

Wie aus Fig. 3, 4 weiters ersichtlich, ist das Kernelement 9 an einer Hinterkante mit einer im Wesentlichen in Längsrichtung 2a des oberen Außenhautelements 2 verlaufenden Verstärkungsstruktur 19 versehen, welche durch weitere Nähte 20 aus Faserverbundwerkstoff gebildet ist.

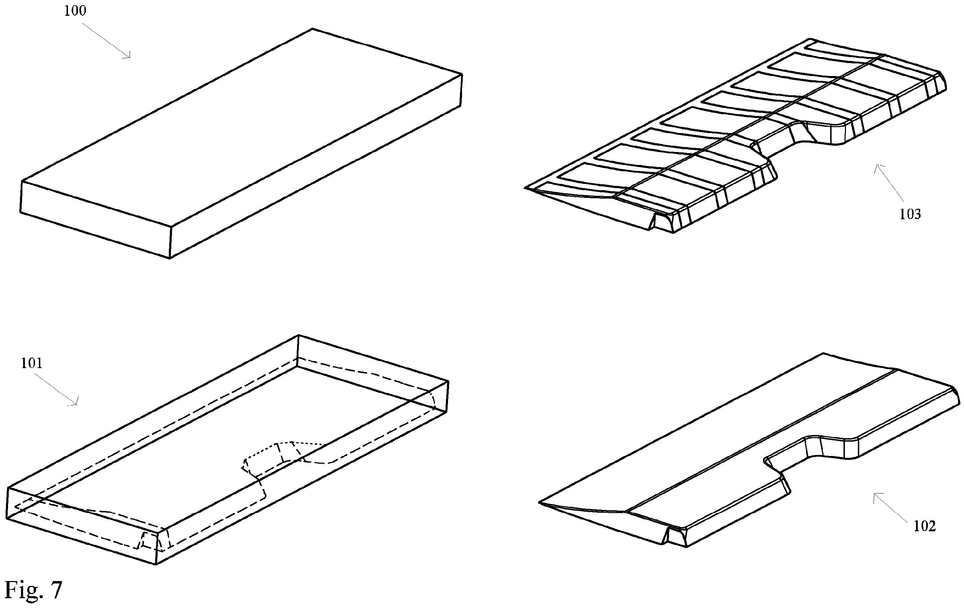

Fig. 7 zeigt schematisch die Herstellung des mit Nähten aus Faserbündeln verstärkten Kernelements 8. Gemäß Pfeil 100 wird ein quaderförmiger Block aus Schaumstoffmaterial bereitgestellt. Aus dem quaderförmigen Block wird das Kernelement 9 erzeugt, beispielsweise gefräst, vgl. Pfeil 101, um ein (noch unverstärktes) Kernelement 9 aus Schaumstoffmaterial zu erhalten (Pfeil 102). Schließlich werden die Nähte 18 mit Hilfe des Verfahrens der EP 1 993 526 B1 so vorgesehen, dass die Verstärkungsrippen 8 in Querrichtung des Kernelements 9 entstehen.

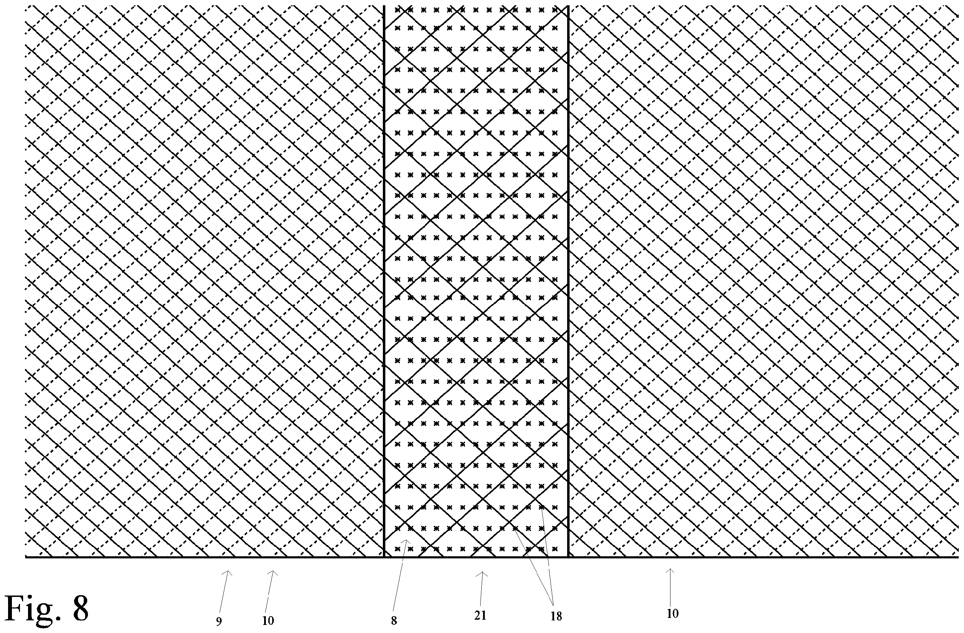

Gemäß Fig. 8 ist zur Ausbildung der Verstärkungsrippe 8 ein vom Kernelement 9 gesondertes Schaumstoffelement 21 vorgesehen, welches mit Nähten 18 aus Faserbündeln versehen ist. Das Schaumstoffelement 21 der Verstärkungsrippe 6 kann aus einem vom Schaumstoffmaterial des Kernelements 9 verschiedenen Schaumstoff oder aus demselben Schaumstoff, aber mit einer höheren Dichte bestehen.

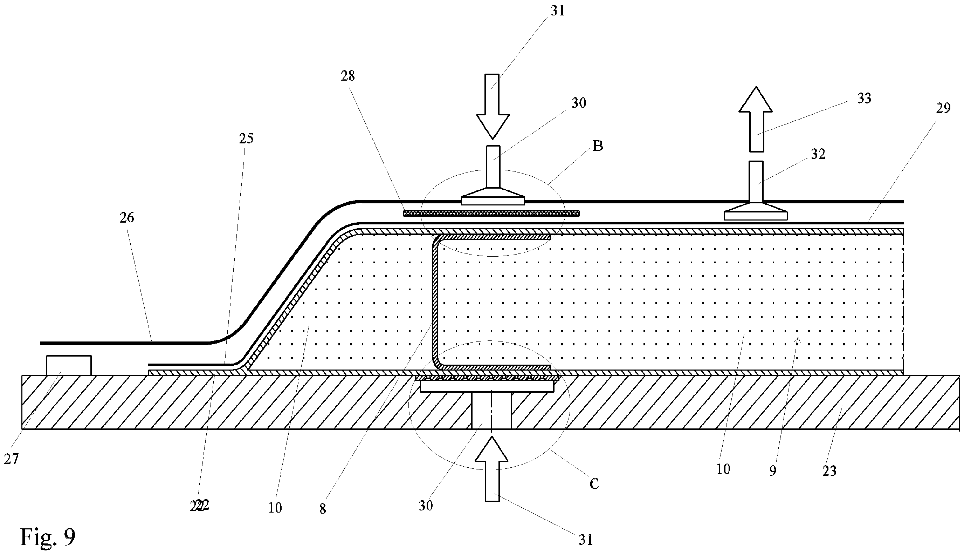

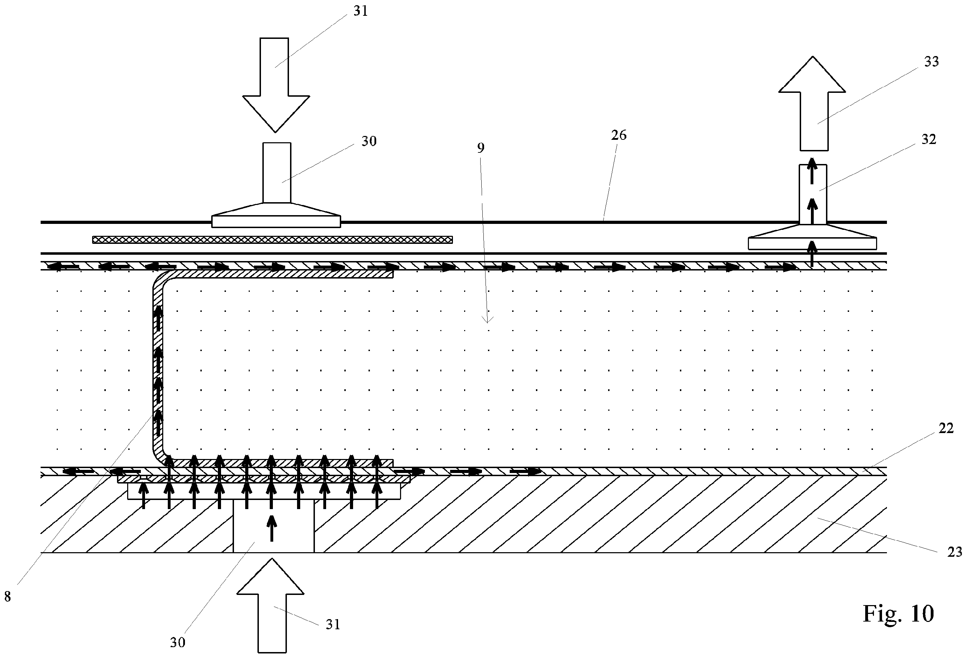

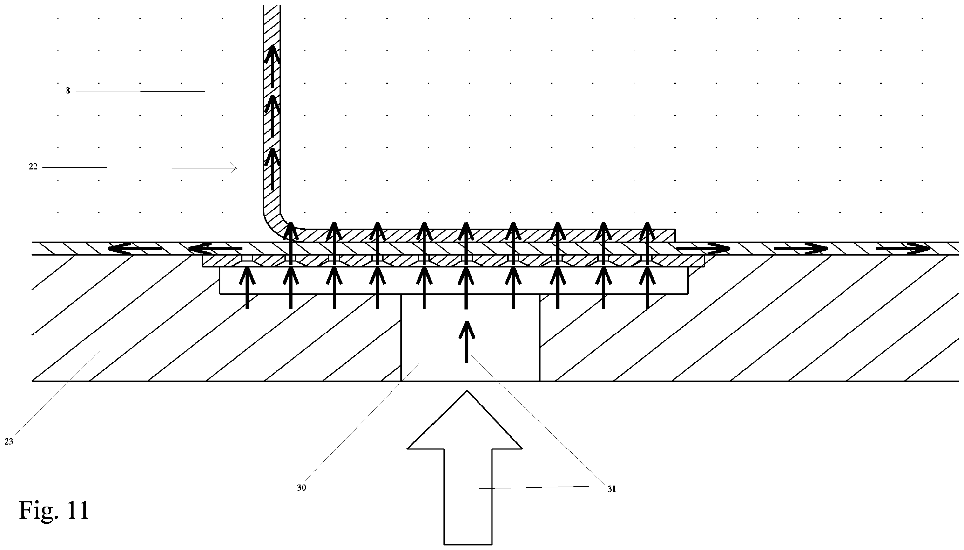

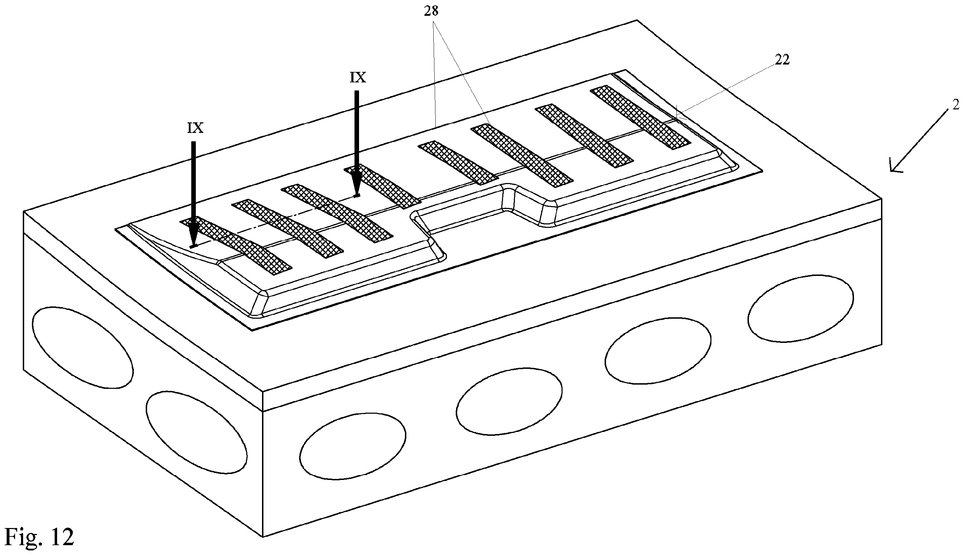

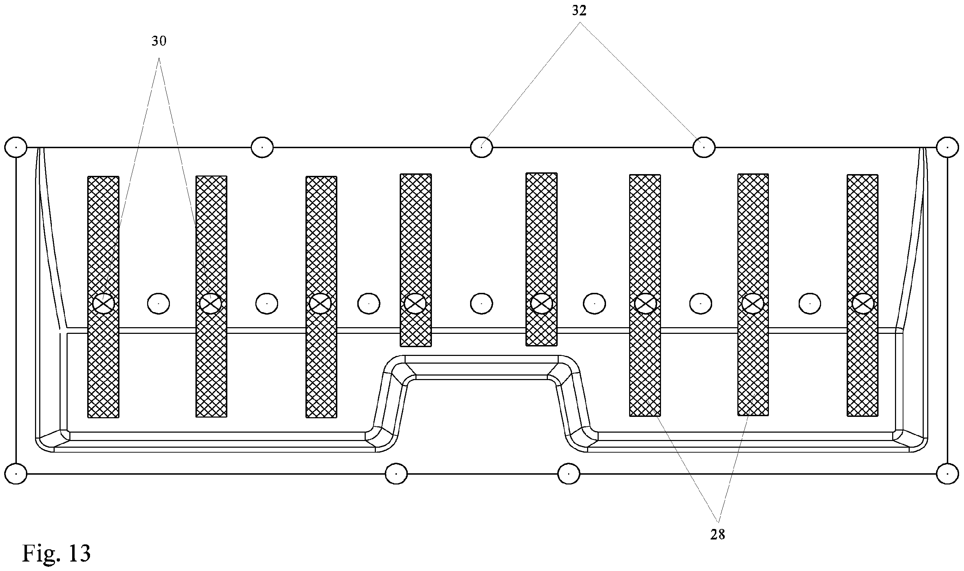

In den Fig. 9 bis 13 ist ein bevorzugtes Infusionsverfahren zur Herstellung der zuvor beschriebenen Steuerflächenelemente 1 gezeigt. Dieses Verfahren wird anhand des Steuerflächenelements 1 der Fig. 1, 2 beschrieben, kann jedoch ebenso dazu verwendet werden, das Steuerflächenelement 1 gemäß Fig. 3 herzustellen.

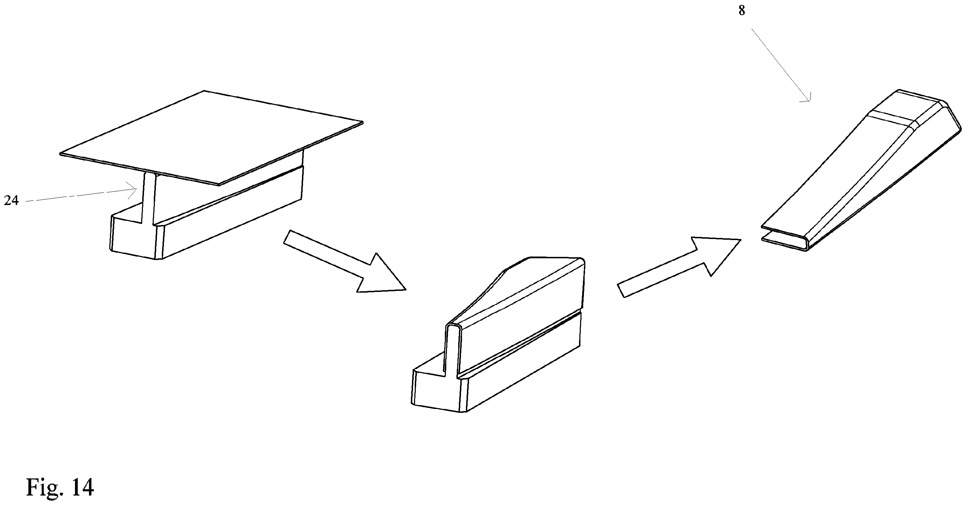

Bei diesem Verfahren wird ein Faserhalbzeug 22 im trockenen Zustand an dem Kernelement 9 angeordnet. Die Anteile des Faserhalbzeugs 22 für das obere Außenhautelement 2 werden auf einer (nur schematisch dargestellten) Tragform 23 aufgelegt. Die Kernsegmente 10 werden zwischen den Anteilen des Faserhalbzeugs 22 für das untere Außenhautelement 3 und den Anteilen des Faserhalbzeugs 22 für die Verstärkungsrippen 8 positioniert. Dadurch werden die Anteile des Faserhalbzeugs 22 für die Verstärkungsrippen 8 beim Infusionsvorgang zuverlässig durch die Kernsegmente 10 des Kernelements 9 gehalten. Die im Querschnitt C-förmigen Verstärkungsrippen 8 können mit Hilfe eines Formwerkzeugs 24 vorgeformt werden (vgl. Fig. 14). Es ist jedoch auch möglich, die Anteile des Faserhalbzeugs 22 für die Verstärkungsrippen 8 erst auf der Tragform 23 in Form zu bringen.

Wie aus Fig. 9 weiters ersichtlich, wird das Faserhalbzeug 22 des Steuerflächenelements 1 auf der Tragform 3 mit einem Folien- bzw. Gewebeaufbau umhüllt. An der Außenseite ist eine luftdichte Folie 26 (auch als Vakuumsack bezeichnet) vorgesehen, welcher über eine Dichteinrichtung 27 an der Tragform 23 angebracht wird. Zwischen der luftdichten Folie 26 und der Tragform 23 wird ein Infusionsraum 25 zur Durchtränkung des Faserhalbzeugs 22 geschaffen. Weiters ist eine Fließhilfe bzw. Verteilermembran 28 vorgesehen, mit welcher der angesaugte Kunststoff auf der Bauteiloberfläche verteilt werden kann. Darüber hinaus ist ein Abreißgewebe 29 ("Peel Ply") vorgesehen, welches unmittelbar auf der Unterseite des Steuerflächenelements 1 aufgebracht wird. Das Abreißgewebe 29 erleichtert das Abziehen der mit dem Kunststoff- bzw. Matrixmaterial durchtränkten Verteilermembran 28.

Wie aus Fig. 9 bis 11 weiters ersichtlich, sind Zuleitungen 30 für den Kunststoff im flüssigen Zustand (vgl. Pfeile 31) vorgesehen. In der gezeigten Ausführung sind die Zuleitungen 30 sowohl auf Seite der Tragform 23 als auch auf Seite der luftdichten Folie 26 vorgesehen. Darüber hinaus sind an der von der Tragform 23 abgewandten Seite Vakuumleitungen 32 vorgesehen, an welchen jeweils ein Unterdruck angelegt wird. Durch Anlegen des Unterdrucks an den Vakuumleitungen 32 wird der Kunststoff im flüssigen Zustand durch die Zuleitungen 30 in den Infusionsraum 25 angesaugt, wobei das Faserhalbzeug 22 zur Ausbildung des oberen Außenhautelementes 2, des unteren Außenhautelementes 3 und der Verstärkungsrippen 8 mit dem Kunststoff durchtränkt wird. Nach vollständiger Durchtränkung des Faserhalbzeugs 22 gelangt der Kunststoff in die Vakuumleitungen 32 (vgl. Pfeile 33). In jeder Vakuumleitung 32 ist ein im trockenen Zustand luftdurchlässiges und harzundurchlässiges Membranfilter (nicht gezeigt) angeordnet, welches bei einer Durchtränkung mit dem Kunststoff in einen im Wesentlichen luftdichten Zustand übergeht. Bei vollständiger Benetzung mit dem Kunststoff schließt das Membranfilter, wodurch die Luftabsaugung unterbrochen wird. Anschließend wird das Steuerflächenelement 1 in einem Ofen (nicht gezeigt) ausgehärtet.

## Patentansprüche

1. Steuerflächenelement (1) für ein Flugzeug, insbesondere Störklappe, mit einem oberen Außenhautelement (2), welches eine luftumströmbare Außenseite (4) aufweist, mit einem unteren Außenhautelement (3) und mit zumindest einer Verstärkungsrippe (8), welche zumindest einen im Wesentlichen senkrecht zur Längsrichtung (2a) des oberen Außenhautelements (2) erstreckten Steg (11) aufweist, wobei sich der Steg (11) der Verstärkungsrippe (8) von der Innenseite des oberen Außenhautelements (2) zur Innenseite des unteren Außenhautelements (3) erstreckt, wobei das Steuerflächenelement (1) ein Kernelement (9) aus einem Schaumstoffmaterial aufweist und die Verstärkungsrippe (8) zwischen zwei Kernsegmenten (10) des Kernelements (9) angeordnet ist, wobei das eine Kernsegment (10) mit der einen Längsseite des Stegs (11) der Verstärkungsrippe (8) und das andere Kernsegment (10) mit der anderen Längsseite des Stegs (11) der Verstärkungsrippe (8) in Kontakt steht, wobei das obere Außenhautelement (2) und das untere Außenhautelement (3) aus Faserverbundwerkstoff bestehen, **dadurch gekennzeichnet, dass** die Verstärkungsrippe (8) zumindest einen im Wesentlichen parallel zur Hauptebene des oberen Außenhautelements (2) erstreckten, an der Innenseite des oberen Außenhautelements (2) angeordneten oberen Flansch (12) und einen im Wesentlichen parallel zur Hauptebene des unteren Außenhautelements (3) erstreckten, an der Innenseite des unteren Außenhautelements (3) angeordneten unteren Flansch (13) aufweist, wobei der obere (12) und der untere Flansch (13) in einem Winkel zum Steg (11) der Verstärkungsrippe (8) angeordnet sind, dass die Versteifungsrippe (8) aus Faserverbundwerkstoff besteht, und dass das obere Außenhautelement (2), die Verstärkungsrippe (8) und das untere Außenhautelement (3) über den Kunststoff des Faserverbundwerkstoffs miteinander verbunden sind.

2. Steuerflächenelement (1) nach Anspruch 1, **dadurch gekennzeichnet, dass** das Kernelement (9) zwischen dem oberen Außenhautelement (2), dem unteren Außenhautelement (3) und der zumindest einen Verstärkungsrippe (8) gebildete Zwischenräume im Wesentlichen vollständig ausfüllt.

3. Steuerflächenelement (1) nach Anspruch 1 oder 2, **dadurch gekennzeichnet, dass** als Verstärkungsrippe (8) ein Faserverbundelement, insbesondere aus kohlenstofffaserverstärktem Kunststoff, vorgesehen ist, welches zwischen zwei voneinander getrennten Kernsegmenten (10) des Kernelements (9) angeordnet ist.

4. Steuerflächenelement (1) nach Anspruch 3, **dadurch gekennzeichnet, dass** der obere (12) und/oder untere Flansch (13) im Wesentlichen im rechten Winkel zum Steg (11) der Verstärkungsrippe (8) angeordnet ist.

5. Steuerflächenelement (1) nach einem der Ansprüche 1 bis 4, **dadurch gekennzeichnet, dass** zumindest eines der Kernsegmente (10) an einer der Innenseite des unteren Außenhautelements (3) zugewandten Unterseite eine untere Vertiefung (14) für den unteren Flansch (13) der Verstärkungsrippe (8) und/oder an einer der Innenseite des oberen Außenhautelements (2) zugewandten Oberseite eine obere Vertiefung (15) für den oberen Flansch (12) der Verstärkungsrippe (8) aufweist.

6. Steuerflächenelement (1) nach einem der Ansprüche 1 bis 5, **dadurch gekennzeichnet, dass** das obere Außenhautelement (2), das untere Außenhautelement (3) und die zumindest eine Verstärkungsrippe (8) aus kohlenstofffaserverstärktem Kunststoff bestehen.

7. Steuerflächenelement (1) nach einem der Ansprüche 1 bis 6, **dadurch gekennzeichnet, dass** das Schaumstoffmaterial des Kernelements (9) aus Polymethacrylimid gebildet ist.

8. Verfahren zur Herstellung eines Steuerflächenelements (1), insbesondere einer Störklappe, wobei ein oberes Außenhautelement (2) mit einem unteren Außenhautelement (3) verbunden wird, wobei zumindest eine Verstärkungsrippe (8) ausgebildet wird, wobei ein Kernelement (9) aus einem Schaumstoffmaterial vorgesehen wird, wobei die Verstärkungsrippe (8) zwischen zwei Kernsegmenten (10) des Kernelements (9) ausgebildet wird, wobei die Verstärkungsrippe (8) zumindest einen im Wesentlichen senkrecht zur Längsrichtung (2a) des oberen Außenhautelements (2) erstreckten Steg (11) aufweist, wobei das eine Kernsegment (10) mit der einen Längsseite des Stegs (11) der Verstärkungsrippe (8) und das andere Kernsegment (10) mit der anderen Längsseite des Stegs (11) der Verstärkungsrippe (8) in Kontakt steht, wobei sich der Steg (11) der Verstärkungsrippe (8) von der Innenseite des oberen Außenhautelements (2) zur Innenseite des unteren Außenhautelements (3) erstreckt, **dadurch gekennzeichnet, dass** die Verstärkungsrippe (8) zumindest einen im Wesentlichen parallel zur Hauptebene des oberen Außenhautelements (2) erstreckten, an der Innenseite des oberen Außenhautelements (2) angeordneten oberen Flansch (12) und einen im Wesentlichen parallel zur Hauptebene des unteren Außenhautelements (3) erstreckten, an der Innenseite des unteren Außenhautelements (3) angeordneten unteren Flansch (13) aufweist, wobei der obere (12) und der untere Flansch (13) in einem Winkel zum Steg (11) der Verstärkungsrippe (8) angeordnet sind, und dass ein Faserhalbzeug zur Ausbildung des oberen Außenhautelementes (2), des unteren Außenhautelementes (3) und der Verstärkungsrippe (8) im trockenen Zustand an dem Kernelement (9) angeordnet und danach mit einem Kunststoff im flüssigen Zustand durchtränkt wird.

9. Verfahren nach Anspruch 8, **dadurch gekennzeichnet, dass** das Faserhalbzeug (22) mittels einer Folie (26) in einem Infusionsraum (25) angeordnet wird, der mit zumindest einer Zuleitung (30) für den Kunststoff im flüssigen Zustand und mit zumindest einer Vakuumleitung (32) verbunden wird, wobei durch Anlegen eines Unterdrucks an der Vakuumleitung (32) der Kunststoff im flüssigen Zustand angesaugt wird, wobei das Faserhalbzeug (22) zur Ausbildung des oberen Außenhautelementes (2), des unteren Außenhautelementes (3) und der zumindest einen Verstärkungsrippe (8) durchtränkt wird.

## Claims

1. Control surface element (1) for an aircraft, in particular a spoiler, comprising an upper outer skin element (2), which has an outer side (4) around which air can flow, a lower outer skin element (3) and at least one reinforcing rib (8), which has at least one web (11) extending substantially perpendicularly to the longitudinal direction (2a) of the upper outer skin element (2), the web (11) of the reinforcing rib (8) extending from the inside of the upper outer skin element (2) to the inside of the lower outer skin element (3), the control surface element (1) having a core element (9) made of a foam material and the reinforcing rib (8) being arranged between two core segments (10) of the core element (9), one core segment (10) being in contact with one longitudinal side of the web (11) of the reinforcing rib (8) and the other core segment (10) being in contact with the other longitudinal side of the web (11) of the reinforcing rib (8), the upper outer skin element (2) and the lower outer skin element (3) consisting of fibre composite material, **characterised in that** the reinforcing rib (8) has at least one upper flange (12), which extends substantially parallel to the main plane of the upper outer skin element (2) and is arranged on the inside of the upper outer skin element (2), and a lower flange (13), which extends substantially parallel to the main plane of the lower outer skin element (3) and is arranged on the inside of the lower outer skin element (3), the upper (12) and the lower flange (13) being arranged at an angle to the web (11) of the reinforcing rib (8), **in that** the reinforcing rib (8) consists of fibre composite material, and **in that** the upper outer skin element (2), the reinforcing rib (8) and the lower outer skin element (3) are interconnected via the plastics material of the fibre composite material.

2. Control surface element (1) according to claim 1, **characterised in that** the core element (9) substantially completely fills spaces formed between the upper outer skin element (2), the lower outer skin element (3) and the at least one reinforcing rib (8).

3. Control surface element (1) according to either claim 1 or claim 2, **characterised in that** a fibre composite element, in particular made of carbon fibre reinforced plastics material, is provided as the reinforcing rib (8), which is arranged between two separate core segments (10) of the core element (9).

4. Control surface element (1) according to claim 3, **characterised in that** the upper (12) and/or lower flange (13) is arranged substantially at a right angle to the web (11) of the reinforcing rib (8).

5. Control surface element (1) according to any of claims 1 to 4, **characterised in that** at least one of the core segments (10) has, on an underside facing the inside of the lower outer skin element (3), a lower recess (14) for the lower flange (13) of the reinforcing rib (8) and/or has, on an upper side facing the inside of the upper outer skin element (2), an upper recess (15) for the upper flange (12) of the reinforcing rib (8).

6. Control surface element (1) according to any of claims 1 to 5, **characterised in that** the upper outer skin element (2), the lower outer skin element (3) and the at least one reinforcing rib (8) consist of carbon fibre reinforced plastics material.

7. Control surface element (1) according to any of claims 1 to 6, **characterised in that** the foam material of the core element (9) is formed from polymethacrylimide.

8. Method for producing a control surface element (1), in particular a spoiler, an upper outer skin element (2) being connected to a lower outer skin element (3), at least one reinforcing rib (8) being formed, a core element (9) made from a foam material being provided, the reinforcing rib (8) being formed between two core segments (10) of the core element (9), the reinforcing rib (8) having at least one web (11) extending substantially perpendicularly to the longitudinal direction (2a) of the upper outer skin element (2), one core segment (10) being in contact with one longitudinal side of the web (11) of the reinforcing rib (8) and the other core segment (10) being in contact with the other longitudinal side of the web (11) of the reinforcing rib (8), the web (11) of the reinforcing rib (8) extending from the inside of the upper outer skin element (2) to the inside of the lower outer skin element (3), **characterised in that** the reinforcing rib (8) comprises at least one upper flange (12), which extends substantially parallel to the main plane of the upper outer skin element (2) and is arranged on the inside of the upper outer skin element (2), and a lower flange (13), which extends substantially parallel to the main plane of the lower outer skin element (3) and is arranged on the inside of the lower outer skin element (3), the upper (12) and the lower flange (13) being arranged at an angle to the web (11) of the reinforcing rib (8), and **in that** a semi-finished fibre product for forming the upper outer skin element (2), the lower outer skin element (3) and the reinforcing rib (8) is arranged in a dry state on the core element (9) and then impregnated with a plastics material in a liquid state.

9. Method according to claim 8, **characterised in that** the semi-finished fibre product (22) is arranged by means of a film (26) in an infusion space (25) which is connected to at least one supply line (30) for the plastics material in the liquid state and to at least one vacuum line (32), the plastics material in the liquid state being sucked in by applying a negative pressure to the vacuum line (32), the semi-finished fibre product (22) being impregnated in order to form the upper outer skin element (2), the lower outer skin element (3) and the at least one reinforcing rib (8).

## Revendications

1. Elément de gouverne (1) pour un avion, en particulier déporteur, avec un élément de revêtement extérieur supérieur (2), lequel présente une face extérieure (4) autour de laquelle l'air peut s'écouler, avec un élément de revêtement extérieur inférieur (3) et avec au moins une nervure de renfort (8), laquelle présente au moins un élément jointif (11) étendu sensiblement perpendiculairement à la direction longitudinale (2a) de l'élément de revêtement extérieur supérieur (2), dans lequel l'élément jointif (11) de la nervure de renfort (8) s'étend à partir de la face intérieure de l'élément de revêtement extérieur supérieur (2) vers la face intérieure de l'élément de revêtement extérieur inférieur (3), dans lequel l'élément de gouverne (1) présente un élément de noyau (9) composé d'un matériau alvéolaire et la nervure de renfort (8) est disposée entre deux segments de noyau (10) de l'élément de noyau (9), dans lequel l'un des segments de noyau (10) est en contact avec l'un des grands côtés de l'élément jointif (11) de la nervure de renfort (8) et l'autre segment de noyau (10) est en contact avec l'autre grand côté de l'élément jointif (11) de la nervure de renfort (8), dans lequel l'élément de revêtement extérieur supérieur (2) et l'élément de revêtement extérieur inférieur (3) sont constitués de matériau composite renforcé par des fibres, **caractérisé en ce que** la nervure de renfort (8) présente au moins une bride supérieure (12) étendue sensiblement parallèlement au plan principal de l'élément de revêtement extérieur supérieur (2), disposée sur la face intérieure de l'élément de revêtement extérieur supérieur (2) et une bride inférieure (13) étendue sensiblement parallèlement au plan principal de l'élément de revêtement extérieur inférieur (3), disposée sur la face intérieure de l'élément de revêtement extérieur inférieur (3), dans lequel la bride supérieure (12) et la bride inférieure (13) sont disposées à un angle par rapport à l'élément jointif (11) de la nervure de renfort (8), que la nervure de renfort (8) est constituée de matériau composite renforcé par des fibres, et que l'élément de revêtement extérieur supérieur (2), la nervure de renfort (8) et l'élément de revêtement extérieur inférieur (3) sont reliés les uns aux autres par l'intermédiaire du plastique du matériau composite renforcé par des fibres.

2. Elément de gouverne (1) selon la revendication 1, **caractérisé en ce que** l'élément de noyau (9) remplit sensiblement entièrement les intervalles formés entre l'élément de revêtement extérieur supérieur (2), l'élément de revêtement extérieur inférieur (3) et la au moins une nervure de renfort (8).

3. Elément de gouverne (1) selon la revendication 1 ou 2, **caractérisé en ce qu'**un élément composite renforcé par des fibres, en particulier un plastique renforcé par des fibres de carbone, lequel est disposé entre deux segments de noyau (10) de l'élément de noyau (9) séparés l'un de l'autre, est prévu comme nervure de renfort (8).

4. Elément de gouverne (1) selon la revendication 3, **caractérisé en ce que** la bride supérieure (12) et/ou bride inférieure (13) est disposée sensiblement à angle droit par rapport à l'élément jointif (11) de la nervure de renfort (8).

5. Elément de gouverne (1) selon l'une quelconque des revendications 1 à 4, **caractérisé en ce qu'**au moins un des segments de noyau (10) présente sur une face inférieure tournée vers la face intérieure de l'élément de revêtement extérieur inférieur (3) un évidement inférieur (14) pour la bride inférieure (13) de la nervure de renfort (8) et/ou sur une face supérieure tournée vers la face intérieure de l'élément de revêtement extérieur supérieur (2) un évidement supérieur (15) pour la bride supérieure (12) de la nervure de renfort (8).

6. Elément de gouverne (1) selon l'une quelconque des revendications 1 à 5, **caractérisé en ce que** l'élément de revêtement extérieur supérieur (2), l'élément de revêtement extérieur inférieur (3) et la au moins une nervure de renfort (8) sont constitués d'un plastique renforcé par des fibres de carbone.

7. Elément de gouverne (1) selon l'une quelconque des revendications 1 à 6, **caractérisé en ce que** le matériau alvéolaire de l'élément de noyau (9) est formé de polyméthacrylimide.

8. Procédé pour fabriquer un élément de gouverne (1), en particulier un déporteur, dans lequel un élément de revêtement extérieur supérieur (2) est relié à un élément de revêtement extérieur inférieur (3), dans lequel au moins une nervure de renfort (8) est réalisée, dans lequel un élément de noyau (9) composé d'un matériau alvéolaire est prévu, dans lequel la nervure de renfort (8) est réalisée entre deux segments de noyau (10) de l'élément de noyau (9), dans lequel la nervure de renfort (8) présente au moins un élément jointif (11) étendu sensiblement perpendiculairement à la direction longitudinale (2a) de l'élément de revêtement extérieur supérieur (2), dans lequel l'un des segments de noyau (10) est en contact avec l'un des grands côtés de l'élément jointif (11) de la nervure de renfort (8) et l'autre segment de noyau (10) est en contact avec l'autre grand côté de l'élément jointif (11) de la nervure de renfort (8), dans lequel l'élément jointif (11) de la nervure de renfort (8) s'étend à partir de la face intérieure de l'élément de revêtement extérieur supérieur (2) vers la face intérieure de l'élément de revêtement extérieur inférieur (3), **caractérisé en ce que** la nervure de renfort (8) présente au moins une bride supérieure (12) étendue sensiblement parallèlement au plan principal de l'élément de revêtement extérieur supérieur (2), disposée sur la face intérieure de l'élément de revêtement extérieur supérieur (2) et une bride inférieure (13) étendue sensiblement parallèlement au plan principal de l'élément de revêtement extérieur inférieur (3), disposée sur la face intérieure de l'élément de revêtement extérieur inférieur (3), dans lequel la bride supérieure (12) et la bride inférieure (13) sont disposées à un angle par rapport à l'élément jointif (11) de la nervure de renfort (8), et qu'un demi-produit fibreux pour la réalisation de l'élément de revêtement extérieur supérieur (2), de l'élément de revêtement extérieur inférieur (3) et de la nervure de renfort (8) est disposé à l'état sec sur l'élément de noyau (9) et ensuite imbibé d'un plastique à l'état liquide.

9. Procédé selon la revendication 8, **caractérisé en ce que** le demi-produit (22) est disposé au moyen d'une feuille (26) dans une chambre d'infusion (25), qui est reliée à au moins une conduite d'alimentation (30) pour le plastique à l'état liquide et à au moins une conduite de vide (32), dans lequel par application d'une pression négative sur la conduite de vide (32) le plastique à l'état liquide est aspiré, dans lequel le demi-produit fibreux (22) est imprégné pour la réalisation de l'élément de revêtement extérieur supérieur (2), de l'élément de revêtement extérieur inférieur (3) et de la au moins une nervure de renfort (8).
